(19) **Europäisches Patentamt**
European Patent Office
Office européen des brevets

(11) **EP 3 401 651 B1**

(12) **EUROPÄISCHE PATENTSCHRIFT**

(45) Veröffentlichungstag und Bekanntmachung des Hinweises auf die Patenterteilung:
**13.07.2022 Patentblatt 2022/28**

(21) Anmeldenummer: **17170169.1**

(22) Anmeldetag: **09.05.2017**

(51) Internationale Patentklassifikation (IPC):
***G01F 23/80*** *(2022.01)* ***G01F 23/284*** *(2006.01)*

(52) Gemeinsame Patentklassifikation (CPC):
**G01F 23/284; G01F 23/802;** G01F 23/804

(54) **GRENZSTANDMESSUNG, DRUCKMESSUNG ODER DURCHFLUSSMESSUNG MIT KURZER MESSZEIT**

FILL LEVEL MEASUREMENT, PRESSURE MEASUREMENT OR FLOW RATE MEASUREMENT WITH SHORT MEASUREMENT TIME

MESURE DE NIVEAU, MESURE DE PRESSION OU MESURE DE DÉBIT À TEMPS DE MESURE COURT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.11.2018 Patentblatt 2018/46**

(73) Patentinhaber: **VEGA Grieshaber KG**
**77709 Wolfach (DE)**

(72) Erfinder:
• **WELLE, Roland**
**77756 Hausach (DE)**
• **BÖRSIG, Jörg**
**77776 Schapbach (DE)**

• **GRIESSBAUM, Karl**
**77796 Mühlenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
EP-A1- 2 369 362    EP-A2- 2 677 285
WO-A1-03/019120    DE-A1-102004 022 911
US-A- 5 072 220    US-A- 5 245 347
US-A1- 2007 186 678    US-A1- 2012 201 100
US-A1- 2014 002 274    US-A1- 2017 076 711
US-B1- 7 334 470    US-B2- 8 843 329

EP 3 401 651 B1

**Beschreibung**

Gebiet der Erfindung

Die Erfindung betrifft Messgeräte für die industrielle Prozessautomatisierung. Insbesondere betrifft die Erfindung ein Füllstandradar, eine Messgeräteschaltung für ein Messgerät, ein Verfahren zum Erfassen und Verarbeiten von Messdaten eines Messgeräts, ein Programmelement und ein computerlesbares Medium.

Hintergrund

Radargeräte für die Füllstandmessung basieren oft auf dem frequenzmodulierten Dauerstrichverfahren, das auch als FMCW (Frequency Modulated Continuous Wave) bezeichnet wird. Diese Systeme werden üblicherweise über eine Zweidrahtleitung mit Energie versorgt, woraus resultiert, dass der Betrieb von Mikrowellenbausteinen mit hohem Leistungsbedarf nur unter Verwendung eines ausgeklügelten Energiemanagements und stromsparender Schaltungskomponenten realisiert werden kann.

Ein wesentlicher Systemparameter beim Auslegen von FMCW-Systemen ist die Zeitdauer T, während der das System ein Mikrowellensignal in Richtung der Füllgutoberfläche abstrahlt. Während dieser Zeitdauer T müssen alle Hochfrequenzbausteine, alle analogen Signalverarbeitungsbausteine und auch die Analog-Digital-Wandler mit Energie versorgt werden. Die pro Messzyklus verbrauchte Energie hängt damit direkt mit der Vorgabe der Zeitdauer T zusammen, und kann verkleinert werden, indem die Messzeit verkleinert wird.

US 7,334,470 B1 beschreibt ein Füllstandmesssystem für den gepulsten Betrieb, welches eine Resampling-Stufe aufweist.

US 5,245,347 A beschreibt ein AWTSS-System zur Steuerung von Luft-Bodenraketen mit einem FiFo-Speicher.

WO 03/019120 A1 beschreibt ein Verfahren und eine Vorrichtung zur direkten Digitalisierung von Mikrowellensignalen. Die an der Füllgutoberfläche reflektierten Mikrowellensignale können in ihrer Frequenz unverändert mit einer ersten Abtastrate in einer Analog-Speichereinheit abgespeichert werden. Die abgespeicherten Analogwerte werden dann mit einer zweiten Rate, die niedriger ist als die erste Rate, und mittels eines A/D-Wandlers, der aufgrund der Zwischenspeicherung nunmehr eine relativ niedrige Abtastrate aufweisen kann, in Digitalwerte gewandelt.

Zusammenfassung der Erfindung Es ist eine Aufgabe der Erfindung, ein Füllstandradar und eine Messgeräteschaltung anzugeben, welche eine möglichst kurze Sendezeit auch bei begrenzter Energieversorgung darstellen kann.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Füllstandradar mit einem Prozessor und einer Analog-Digital-Wandlerschaltung. Zwischen der Analog-Digital-Wandlerschaltung und dem Prozessor ist ein Zwischenspeicherbaustein vorgesehen, der diese beiden Einheiten miteinander verbindet. Der Zwischenspeicherbaustein dient dem Empfang von digitalen Signalen der Analog-Digital-Wandlerschaltung mit einer ersten Datenrate. Der Prozessor ist zum Auslesen des Zwischenspeicherbausteins mit einer zweiten Datenrate ausgeführt, die niedriger als die erste Datenrate ist.

Erfindungsgemäß, ist die erste Datenrate höher oder sogar deutlich höher als die zweite Datenrate. Hierdurch wird es ermöglicht, langsamer arbeitende, energiesparende Prozessoren zu verwenden.

Gemäß einer Ausführungsform der Erfindung ist die Analog-Digital-Wandlerschaltung zum Erzeugen der digitalen Signale in Form eines differenziellen Ausgangssignals ausgeführt. Hierfür kann vorgesehen sein, dass die Analog-Digital-Wandlerschaltung eine sog. Low-Voltage Differential Signaling Schnittstelle, LVDS, aufweist.

Es kann vorgesehen sein, dass der Prozessor eine asymmetrische Schnittstelle zum Auslesen des Zwischenspeicherbausteins aufweist. In diesem Fall ist der Prozessor mit dem Zwischenspeicherbaustein über eine asymmetrische Kommunikationsleitung verbunden, wohingegen die Analog-Digital-Wandlerschaltung über eine symmetrische Kommunikations- bzw. Datenübertragungsleitung mit dem Zwischenspeicherbaustein verbunden ist.

Gemäß einer Ausführungsform der Erfindung handelt es sich bei dem Zwischenspeicherbaustein um einen programmierbaren Logikbaustein, insbesondere um einen FPGA Baustein (FPGA: Field Programmable Gate Array) in Kombination mit einem Datenspeicher.

Bei den digitalen Signalen, die von der Analog-Digital-Wandlerschaltung von dem Zwischenspeicherbaustein ausgegeben werden, kann es sich, gemäß einer Ausführungsform der Erfindung, um die digitalen Abtastwerte des Empfangssignal des Füllstandradars (oder allgemeiner: des Messgeräts) handeln. Im Fall eines Füllstandradars handelt es sich typischerweise bei dem Empfangssignal um das von der Füllgutoberfläche und anderen Reflektoren reflektierte Sendesignal des Füllstandradars.

Der Zwischenspeicherbaustein kann zum Verarbeiten der empfangenen digitalen Signale der Analog-Digital-Wandlerschaltung eingerichtet sein. Insbesondere kann es vorgesehen sein, dass der Zwischenspeicherbaustein daraus einen Messwert oder mehrere Messwerte berechnet oder eine Signalvorverarbeitung vornimmt, sodass der nachgeschaltete Prozessor den Messwert mit reduziertem Aufwand berechnen kann. Gemäß einer weiteren Ausführungsform der Erfindung weist der Zwischenspeicherbaustein einen First In-First Out-Speicher und/oder einen Ringspeicher auf.

Gemäß einer weiteren Ausführungsform der Erfindung ist die Messgeräteschaltung und insbesondere das Füllstandradar zum Anschluss an eine 4-20mA Zweileiterschleife zur Energieversorgung des Messgeräts und zur Ausgabe der Messwerte sowie zur weitergehenden Kommunikation mit einem externen Bediengerät ausgeführt.

Erfindungsgemäß betrifft die Messgeräteschaltung ein Messgerät, bei dem es sich um ein Füllstandmessgerät, ein Grenzstandmessgerät, ein Druckmessgerät oder ein Durchflussmessgerät handelt. Das Messgerät weist einen Prozessor, eine Analog-Digital-Wandlerschaltung und einen Zwischenspeicherbaustein auf. Diese Elemente entsprechen den oben beschriebenen Elementen des Füllstandradars.

Nicht erfindungsgemäß können die oben und im Folgenden beschriebenen Merkmale auch in anderen Messgeräteschaltungen umgesetzt werden. An dieser Stelle sei darauf hingewiesen, dass die im Folgenden im Hinblick auf das Verfahren beschriebenen Merkmale von den Elementen der Messgeräteschaltungen und verschiedenen Füllstandradarsystemen implementiert werden können. Umgekehrt können die im Folgenden im Hinblick auf das Füllstandradar beschriebenen Merkmale als Verfahrensschritte umgesetzt werden.

Ein weiterer Aspekt der Erfindung betrifft ein Verfahren zur Grenzstandmessung, Druckmessung oder Durchflussmessung und zum Erfassen und Verarbeiten von Messdaten eines Messgeräts der Prozessautomatisierung, wie eines Füllstandmessgeräts, eines Druckmessgeräts, eines Grenzstandsensors oder eines Durchflussmessgeräts. Nach der Aktivierung eines Zwischenspeicherbausteins erfolgt der Empfang von digitalen Signalen in dem Zwischenspeicherbaustein. Die digitalen Signale korrespondieren mit erfassten Messdaten, beispielsweise eines vom Gerät empfangenen, an der Füllgutoberfläche reflektierten Sendesignals, von einer Analog-Digital-Wandlerschaltung mit einer ersten Datenrate. Nach der Aktivierung eines Prozessors wird der Zwischenspeicherbaustein von dem Prozessor mit einer zweiten Datenrate ausgelesen, welche ungleich der ersten Datenrate ist. Erfindungsgemäß ist die zweite Datenrate niedriger als die erste Datenrate. Nach der Deaktivierung des Zwischenspeicherbausteins wird der Messwert vom Messgerät ausgegeben und dieser Messwert wurde aus den digitalen Signalen berechnet und die Ausgabe des Messwerts erfolgt durch den Prozessor. Die Berechnung des Messwerts kann erfindungsgemäß im Prozessor erfolgen, oder im Zwischenspeicherbaustein, oder in Zusammenarbeit des Prozessors mit dem Zwischenspeicherbaustein erfolgen. Danach wird der Prozessor in einen Schlafmodus versetzt, um Energie zu sparen, wonach der Zwischenspeicherbaustein wieder aktiviert werden kann.

Ein weiterer Aspekt der Erfindung betrifft ein Programmelement, das, wenn es auf einer Messgeräteschaltung, die oben und im Folgenden beschrieben wird, ausgeführt wird, die Messgeräteschaltung anleitet, die oben und im Folgenden beschriebenen Verfahrensschritte auszuführen.

Ein weiterer Aspekt der Erfindung betrifft ein computerlesbares Medium, auf dem das oben beschriebene Programmelement gespeichert ist.

Ein weiterer Aspekt der Erfindung betrifft die Verwendung einer Messgeräteschaltung, wie sie oben und im Folgenden beschrieben ist, für die Grenzstandmessung. Ein weiterer Aspekt der Erfindung betrifft die Verwendung einer solchen Messgeräteschaltung für die Druckmessung und ein weiterer Aspekt der Erfindung betrifft die Verwendung einer solchen Messgeräteschaltung für die Durchflussmessung.

Durch die Verringerung der Messzeit wird die notwendige Arbeitsfrequenz der Analog-Digital-Wandlerschaltung erhöht. Die Analog-Digital-Wandlerschaltung weist eine verhältnismäßig hohe Arbeitsfrequenz auf und es kann vorgesehen sein, dass sie die digitalen Daten differenziell an den Zwischenspeicher überträgt. Der beispielsweise digital programmierbare Zwischenspeicherbaustein dient als Wandler zwischen den schnellen differenziellen Ausgangssignalen der Analog-Digital-Wandlerschaltung und den typischerweise asymmetrischen Signaleingängen des energiesparenden Prozessors.

Ein wichtiger Aspekt der Erfindung besteht darin, dass zumindest ein Prozessor und zumindest eine Analog-Digital-Wandlerschaltung sowie zumindest ein Zwischenspeicherbaustein vorgesehen sind, wobei der Zwischenspeicherbaustein digitale Abtastwerte von der zumindest einen Analog-Digital-Wandlerschaltung mit einer ersten Datenrate empfängt, und wobei der Prozessor digitale Abtastwerte aus dem Zwischenspeicherbaustein mit einer zweiten Datenrate ausliest, wobei die erste Datenrate ungleich der zweiten Datenrate ist.

Ein weiterer, unabhängiger Aspekt der Erfindung kann darin gesehen werden, dass eine energiesparende Messgeräteschaltung, beispielsweise für ein Füllstandmessgerät, vorgesehen ist, welche zumindest eine Analog-Digital-Wandlerschaltung mit einem differenziellen Ausgangssignal, zumindest einen Prozessor mit zumindest einem asymmetrischen Eingang und zumindest einen Mittlerbaustein aufweist, der mit dem Prozessor über zumindest eine asymmetrische Kommunikationsleitung und der Analog-Digital-Wandlerschaltung mit zumindest einer symmetrischen Datenübertragungsleitung verbunden ist. Bei dem Mittlerbaustein handelt es sich erfindungsgemäß um den oben genannten Zwischenspeicherbaustein.

Die Deaktivierung der Analog-Digital-Wandlerschaltung kann, gemäß einer Ausführungsform der Erfindung, dadurch getriggert werden, dass die dem Messgerät verfügbare Energie unter einen vorbestimmten Messwert fällt. Auf diese Weise soll vermieden werden, dass das Messgerät in ein Energiedefizit hineinläuft, also nur noch unzureichend Energie zur Verfügung hat, um die vorgesehenen Aufgaben durchzuführen. Es kann aber auch vorgesehen sein, dass (alternativ oder zusätzlich) die Analog-Digital-Wandlerschaltung 601 deaktiviert wird, wenn der Zwischenspeicherbaustein droht "vollzulaufen". Hierunter ist gemeint, dass der Zwischenspeicher nur noch eine sehr begrenzte Menge an freiem Speicher zur Verfügung hat und es abzusehen ist, dass diese freie Speicherkapazität in absehbarer Zeit aufgebraucht ist. Beispielsweise kann ein Schwellwert definiert sein, der definiert, wie viel freier Mindestspeicher im Zwischenspeicherbaustein zur Verfügung stehen muss, damit die Analog-Digital-Wandlerschaltung aktiv bleiben darf. Dieser Schwellwert kann beispielsweise in Abhängigkeit von der ersten Datenrate, mit welcher der Analog-Digital-Wandler seine Signale an den Zwischenspeicherbaustein abgibt, und/oder der pro Messzyklus zu übertragenden Datenmengen festgelegt werden. Da diese Größen in Abhängigkeit von der Messaufgabe und der Parametrierung des Messgeräts geändert werden können, kann vorgesehen sein, dass das Messgerät die oben genannten Schwellwerte selbstständig anpassen kann.

Es kann vorgesehen sein, dass das Sensor Frontend und die Zwischenspeichereinheit immer gleichzeitig deaktiviert werden, oder hintereinander: Zuerst wird das Sensor Frontend deaktiviert und später, wenn es seine Aufgaben erledigt hat, die Zwischenspeichereinheit. Es kann vorgesehen sein, dass diese Aktivierung immer nach der Durchführung eines Messzyklus erfolgt. Je nach der Menge der zur Verfügung stehenden Energie kann aber auch vorgesehen sein, dass mehrere Messzyklen durchgeführt werden, bevor diese Deaktivierung erfolgt. Auch kann vorgesehen sein, dass der Prozessor immer erst dann aktiviert wird, wenn ein Messzyklus beendet ist, um die Zwischenspeichereinheit auszulesen. Steht ausreichend Energie zur Verfügung, kann aber auch vorgesehen sein, dass der Prozessor schon zu einem früheren Zeitpunkt aktiviert ist und die digitalisierten Daten aus der Zwischenspeichereinheit ausliest. Erst wenn die zur Verfügung stehende Energie einen vorbestimmten Schwellwert unterschreitet, wird zunächst das Frontend deaktiviert und ggf. gleichzeitig, oder kurz danach die Zwischenspeichereinheit. Der Messzyklus wird durch einen Zustand mit deaktiviertem Prozessor, Zwischenspeicher, Analog-Digital-Wandlereinheit und Frontend unterbrochen. Bei Vorhandensein einer vorab definierten Menge an Energie wechselt das Messsystem anschließend wieder in einen Zustand mit aktiviertem Prozessor und aktivierter Zwischenspeichereinheit. Der Prozessor liest die Zwischenspeichereinheit fertig aus, und deaktiviert die Zwischenspeichereinheit erneut. Anschließend bestimmt der Prozessor zumindest einen Messwert und gibt diesen aus. Danach wird auch dieser deaktiviert, damit wieder Energie gesammelt werden kann.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

Kurze Beschreibung der Figuren

Fig. 1 zeigt ein Füllstandradargerät.

Fig. 2 zeigt ein Modulationsschema zum Betrieb eines Messgeräts nach dem FMCW-Prinzip.

Fig. 3 zeigt den Frequenzverlauf eines abgestrahlten Sendesignals sowie den Frequenzverlauf des reflektierten, empfangenen Signals.

Fig. 4 zeigt ein Beispiel einer Datenübertragung über SPI.

Fig. 5 zeigt ein Beispiel für einen Messablauf.

Fig. 6 zeigt eine Messgeräteschaltung für ein Messgerät gemäß einer Ausführungsform der Erfindung.

Fig. 7 zeigt ein Flussdiagramm eines Verfahrens gemäß einer Ausführungsform der Erfindung.

Fig. 8 zeigt ein Flussdiagramm eines Verfahrens gemäß einer weiteren Ausführungsform der Erfindung.

Die Figuren 9A, 9B, 9C und 9D zeigen Messgeräte gemäß Ausführungsformen der Erfindung.

Detaillierte Beschreibung von Ausführungsformen

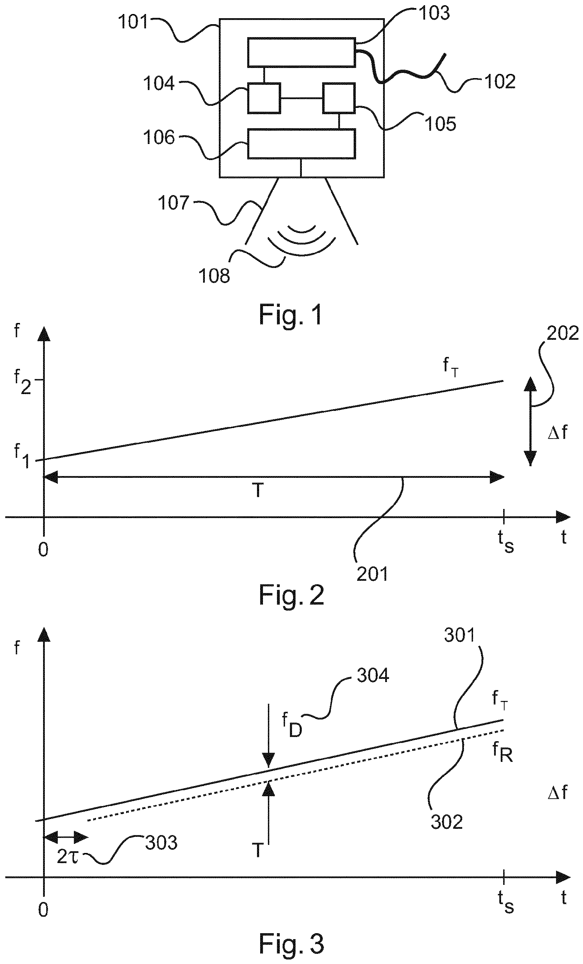

Fig. 1 zeigt wesentliche Komponenten eines Radarfüllstandmessgerätes 101, das im Kontext der Erfindung auch als Füllstandradar bezeichnet ist. Moderne Radarfüllstandmessgeräte finden vielfältige Verwendung in allen Bereichen der Industrie. Seit einigen Jahren findet hierbei ein Übergang zu immer höheren Arbeitsfrequenzen statt, welche es erlauben, die Antennen solch neuartiger Radarmessgeräte in Bezug auf ihre geometrische Baugröße weiter zu verkleinern.

Waren in den ersten Jahren der Verfügbarkeit von Radarfüllstandmessgeräten zunächst nur große Prozessmessbehälter mit zu bestimmenden Entfernungen von einigen Metern interessant, so treten in jüngerer Zeit auch Behälter mit Abmessungen von weniger als einem Meter in den Fokus der Sensoranbieter. Während bei großen Füllgutbehältern eine Änderung des Füllstandes in aller Regel eher langsam erfolgt, kann bei kleinen Behältern ein komplettes Befüllen und/oder komplettes Entleeren des Behälters in einigen Sekunden erreicht werden.

Es ist daher eine Anforderung, die Messwiederholrate neuartiger Sensoren weiter zu erhöhen. Da moderne Sensoren üblicherweise über eine Zweileiterschnittstelle mit einer vorgegebenen Leistung mit Energie versorgt werden, und dieses Leistungsbudget üblicherweise der limitierende Faktor in Bezug auf eine Steigerung der Messwiederholrate darstellt, kann das Ziel einer schnelleren Messung nur in Verbindung mit einer Reduktion der pro Messung verbrauchten Energie erreicht werden.

Es wäre wünschenswert, die Messwiederholrate von Radarsensoren zu erhöhen und die pro Messzyklus benötigte Menge an Energie zu reduzieren. Nachfolgend werden Vorrichtungen und Verfahren zur Umsetzung der genannten Ziele und somit zur Überwindung der bislang bekannten Begrenzungen und Problemstellungen beschrieben.

Das Füllstandmessgerät der Fig. 1 wird über eine Versorgungsleitung 102 mit Energie versorgt. Weit verbreitet ist an dieser Stelle die Verwendung der 4..20mA - Technik, welche ein Auslesen des vom Messgerät ermittelten Messwertes anhand des aufgenommenen Versorgungsstromes ermöglicht. In Verbindung mit den in industriellen Anlagen weit verbreiteten Versorgungsspannungen von beispielsweise 12V ergibt sich im Worst Case Szenario eine Leistung von 48mW, mit welcher das komplette Messgerät 101 betrieben werden muss. Es kann alternativ aber auch vorgesehen sein, das Messgerät über jeweils eine Versorgungs- und eine Kommunikationsleitung mit mehr Energie zu versorgen.

Das Messgerät 101 weist eine Netzteileinheit 103 auf, welche im Allgemeinen auch Komponenten zum Energiemanagement aufweist, beispielsweise einen Energiespeicher. Die Netzteileinheit 103 steht in Verbindung mit einem Prozessor 104, welcher für die Steuerung des Sensorablaufs, die Auswertung der Signale und das Energiemanagement im Zusammenspiel mit den anderen Komponenten des Messgerätes ausgeführt ist.

Das Messgerät weist darüber hinaus eine Hochfrequenzeinheit 106 auf, welche hochfrequente Signale im Bereich von 6GHz, 24GHz, 79GHz oder höheren Frequenzen über eine Sende- und/oder Empfangseinheit 107 in Richtung einer Füllgutoberfläche abstrahlt. Darüber hinaus empfängt die Hochfrequenzeinheit 106 die vom Füllgut und/oder Behältereinbauten reflektierten Signalanteile, und setzt diese nach bekannten Verfahren in ein analoges niederfrequentes Zwischenfrequenzsignal um.

Eine Analog-Digital-Wandlereinheit 105, im Kontext der Erfindung auch als Analog-Digital-Wandlerschaltung bezeichnet, setzt diese analogen Zwischenfrequenzsignale in digitale Signale um, und leitet diese über eine geeignete Schnittstelle an den Prozessor 104 zur weiteren Auswertung weiter.

Die Hochfrequenzeinheit 106 kann die Umsetzung der hochfrequenten Signale in niederfrequente Zwischenfrequenzsignale beispielsweise durch Pulsmodulation in Verbindung mit einem Zeitdehnungsverfahren erreichen. Es kann auch vorgesehen sein, die abgestrahlten Hochfrequenzsignale in Bezug auf die jeweilige Frequenz zu modulieren, und nach dem FMCW Prinzip eine Umsetzung in niederfrequente Zwischenfrequenzsignale zu erreichen.

Fig. 2 zeigt ein Modulationsschema zum Betrieb eines Messgerätes nach dem FMCW Prinzip. Das Füllstandmessgerät sendet während eines Messzyklus T 201 kontinuierlich hochfrequente Signale 108 in Richtung einer Füllgutoberfläche ab.

Die Breite der vom Messgerät erfassten Echos hängt direkt von der Bandbreite Δf 202 ab, weshalb für kleine Messbehälter ein möglichst großer Frequenzhub f2 - f1 angestrebt werden sollte, um sehr nahe beieinanderliegende Echos sicher trennen zu können.

Fig. 3 zeigt den Frequenzverlauf 301 des abgestrahlten Signals fT sowie den Frequenzverlauf 302 des von einem Reflektor nach einer Laufzeit von 2* T 303 reflektierten Signals über der fortschreitenden Zeit während eines Messzyklus 201. Die Hochfrequenzeinheit ermittelt zu jedem Zeitpunkt der Messung unter Verwendung analoger Schaltungskomponenten die Differenz zwischen der Frequenz 301 des gesendeten Signals und der Frequenz 302 des empfangenen Signals. Die Frequenz $f_D$ 304 ist ein Maß für den Abstand des Reflektors vom Radarmessgerät, und wird in Form eines Zwischenfrequenzsignals mit entsprechender Frequenz am Ausgang der Hochfrequenzeinheit 106 bereitgestellt:

$$fD = 2 * \frac{r}{c} * \frac{\Delta f}{T}$$

wobei r den Abstand des Reflektors vom Messgerät und c die Ausbereitungsgeschwindigkeit der elektromagnetischen Welle in der Atmosphäre zwischen Sender und Reflektor beschreibt.

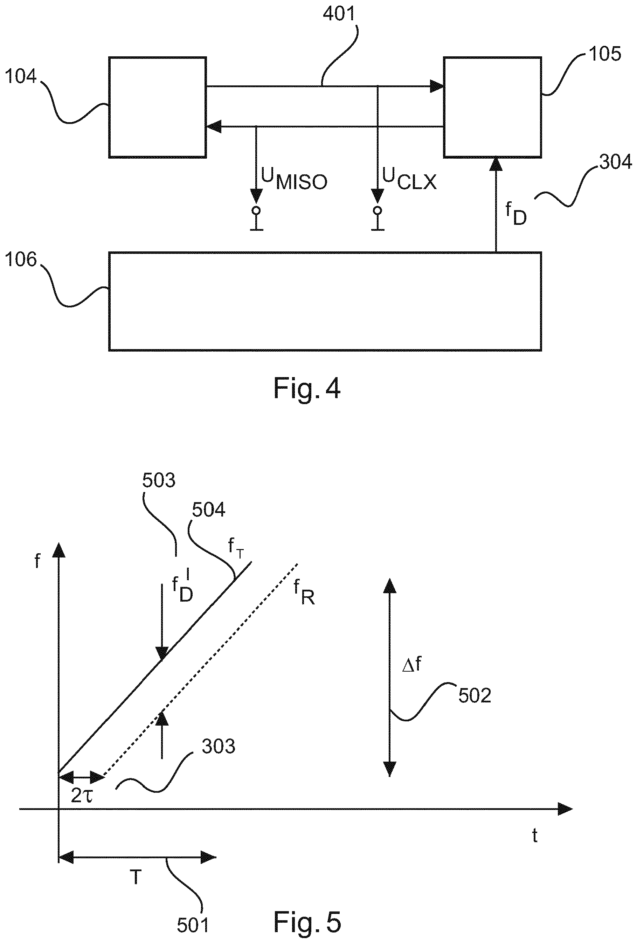

Fig. 4 zeigt weitere Schritte zur Verarbeitung der nach obigem Prinzip erzeugten analogen Zwischenfrequenzsignale 304. Mit Hilfe eines A/D-Wandlers 105 werden die Zwischenfrequenzsignale in hoher Genauigkeit (typischer Weise 16 bit) digitalisiert. Bei typischerweise 5ms Messzeit 201 und einem Frequenzhub 202 von beispielsweise 4 GHz ergeben sich für Messentfernungen von bis zu 40 m hier Frequenzen 304 im Bereich von 0 - 213 kHz.

Unter Berücksichtigung des Nyquist-Theorems werden als Analog-Digital-Wandler typischerweise Exemplare mit einer Abtastfrequenz von bis zu 500 kHz verwendet. Die erfassten Daten müssen während der Messung in Echtzeit an einen Prozessor 104 übertragen werden. Da bei der Selektion eines geeigneten Prozessors 104 das Kriterium der Energieeffizienz eine überragende Rolle spielt, weisen diese Prozessoren im Allgemeinen keine High-Speed-Schnittstellen auf, sondern unterstützen übliche asymmetrische IO Standards wie beispielsweise SPI (Serial Peripheral Interface) oder IIC (Inter-Integrated Circuit).

Fig. 4 zeigt das Beispiel einer Datenübertragung über SPI. Der Prozessor taktet über eine Taktleitung 401 die Datenübertragung aus dem A/D-Wandler 105 mit einer ausreichenden Geschwindigkeit, in obigem Beispiel also mit einer Taktrate > 16bit * 500 kHz/bit = 8 MHz. Es wird schon an dieser Stelle deutlich, dass der Prozessor folglich in der Lage sein muss, diese Frequenz bereitzustellen. Im Zusammenspiel mit dem Ziel eines möglichst energiesparenden Betriebs, welcher eher eine niederfrequente Taktung des Prozessors und dessen Peripherie erfordert, treten hier Probleme auf. Zudem kann die Datenübertragung über eine asymmetrische Schnittstelle in Bezug auf die Taktrate nicht beliebig schnell erfolgen, da kleinste EMV-Störungen schnell zu einem Bitfehler führen können.

Verfügbare A/D-Wandler mit Arbeitsfrequenzen größer 1GHz besitzen daher überwiegend differentielle oder symmetrische Ausgänge, um die hohen Datenraten während der Analog-Digital-Wandlung schaltungstechnisch sicher realisieren zu können.

Fig. 5 zeigt einen für kleine Behälter optimierten Messablauf eines Füllstandmessgerätes nach dem FMCW-Verfahren. Im Vergleich zum Betriebsmodus der Figur 3 wurde im Hinblick auf eine schnellere Messwertermittlung und eine Reduzierung des Energieverbrauchs der Hochfrequenzelemente die Messzeit T 501 massiv reduziert. Angestrebt werden hier beispielsweise Messzeiten von wenigen hundert Mikrosekunden.

Darüber hinaus wurde die Bandbreite $\Delta f$ 502 erhöht, um dicht beieinanderliegende Echos besser trennen zu können. Jede der beschriebenen Maßnahmen trägt dazu bei, dass die von der Hochfrequenzeinheit 106 bereitgestellten Zwischenfrequenzsignale 503 in Bezug auf ihre jeweilige Frequenz im Vergleich zum Betriebsmodus der Figur 3 stark erhöht sind. Im vorliegenden Beispiel ergeben sich bei einem wünschenswerten Frequenzhub von 10 GHz und einer Messzeit von 500us bereits für Echos in einer Entfernung von 2m Zwischenfrequenzsignale mit einer Frequenz von 1.4 MHz. Es wird deutlich, dass schnelle Analog-Digital-Wandler mit hohen Taktfrequenzen für die beabsichtigte Optimierung der Radarmessgeräte von elementarer Bedeutung sind. Derartige Wandler müssen im Allgemeinen jedoch über eine differentielle digitale Schnittstelle an einen Prozessor angebunden werden. Entsprechende Prozessoren mit einer solchen Eingangsschnittstelle sind in Bezug auf die benötigte Leistung für den Einsatz in Füllstandmessgeräten ungeeignet.

Es wäre wünschenswert, eine Schaltungsanordnung sowie ein Verfahren bereitzustellen, mit welchen der Einsatz schneller Analog-Digital-Wandler in Füllstandmessgeräten ermöglicht wird.

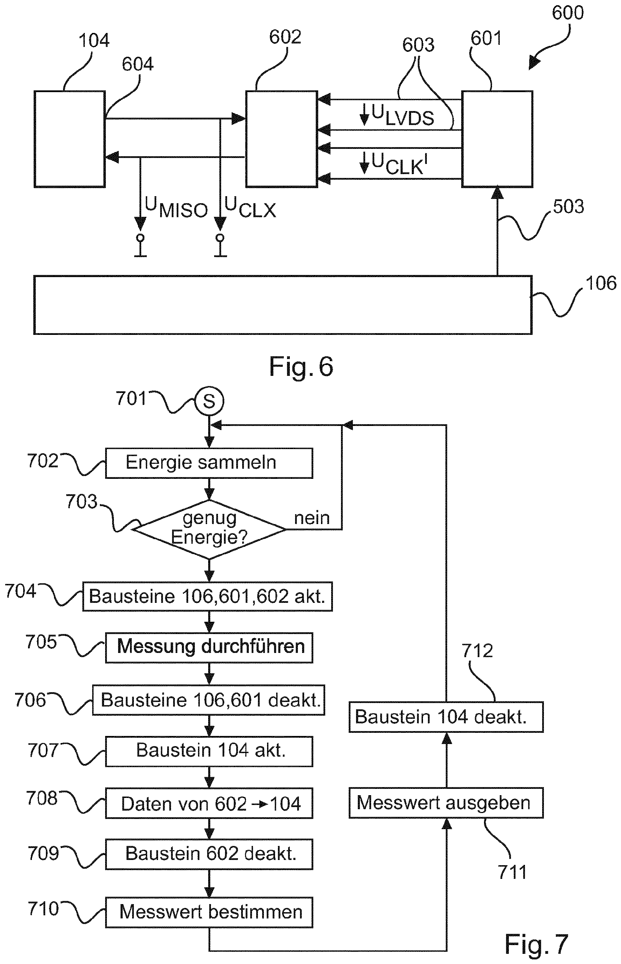

Fig. 6 zeigt eine entsprechende Schaltungsanordnung. Zur Umsetzung der Zwischenfrequenzsignale 503 wird ein A/D-Wandler 601 mit einer hohen Abtastrate verwendet. Der A/D-Wandler 601 weist eine für hohe Taktraten geeignete differentielle Schnittstelle, beispielsweise eine LVDS-Schnittstelle auf. Da der eigentliche Signalverarbeitungs- und/oder Steuerungsprozessor 104 keine differentiellen Signale mit hoher Geschwindigkeit einlesen kann, wird ein programmierbarer Logikbaustein 602 als Zwischenelement eingesetzt.

Der Logikbaustein 602 wird ab Werk derart programmiert, die Daten vom A/D-Wandler in Echtzeit in einen FIFO-Speicher 602 einzulesen. Der Prozessor 104 kann über eine asymmetrische Schnittstelle, beispielsweise eine SPI Schnittstelle, auf den programmierbaren Logikbaustein 602 und hier insbesondere auf den FIFO-Speicher innerhalb des programmierbaren Logikbausteins zugreifen und von diesem Daten auslesen. Der FIFO-Speicher innerhalb des programmierbaren Logikbausteins 602 kann eingerichtet sein, die digitalen Daten des A/D-Wandlers für einen kompletten Messzyklus 501 zwischen zu speichern. Es kann auch vorgesehen sein, den FiFo-Speicher als Ringspeicher mit einer geringeren Größe auszuführen, und die Tatsache auszunutzen, dass der Prozessor 104 einen Teil der digitalen Abtastwerte während der Messung schon aus dem FIFO-Speicher auslesen kann.

Die verwendeten programmierbaren Logikbausteine können über hinreichende Energiemanagementfunktionen verfügen, welche einen Einsatz in einem Zweileiter-Radarfüllstandmessgerät möglich werden lassen.

Darüber hinaus kann durch eine Weiterbildung des Energiemanagements im Füllstandmessgerät ein Betriebsablauf realisiert werden, der den energieeffizienten Einsatz programmierbarer Logikbausteine im Signalerfassungszweig weiter verbessert.

Fig. 7 zeigt ein erstes Ablaufdiagramm für den Betrieb eines Messgerätes gemäß einer Ausführungsform der Erfindung. Das Verfahren beginnt im Startzustand 701, in welchem sich alle Bausteine in einem deaktivierten, d.h. in einem energiesparenden Betriebszustand befinden. Zunächst wird innerhalb des Netzteils 103 Energie gesammelt. Sobald genügend Energie zur Durchführung einer Messung vorhanden ist, werden die Hochfrequenzeinheit 106, der A/D-Wandler 601 sowie der programmierbare Logikbaustein 602 in einen regulären Betriebsmodus überführt. Im Schritt 705 wird nach dem Schema der Figur 5 eine Messung durchgeführt. Die dabei erfassten Messwerte werden unter Vernachlässigung einer gewissen Durchlaufzeit nahezu synchron in den Speicher des programmierbaren Logikbausteins 602 überführt. Im Schritt 706 werden alsbald die Hochfrequenzeinheit 106 sowie die Analog-Digital-Wandlereinheit 601 wieder deaktiviert, d.h. in einen energiesparenden Zustand überführt. Im Schritt 707 wird der Prozessor 104 aus seinem SLEEP-Modus erweckt, um im Schritt 708 die digitalen Messdaten aus dem programmierbaren Logikbaustein 602 zu lesen. Im Schritt 709 wird der Logikbaustein 602 deaktiviert, woraufhin im Schritt 710 der Prozessor 104 den Messwert nach bekannten Verfahren bestimmt. Im Schritt 711 wird der Messwert nach außen hin bereitgestellt, beispielsweise in Form eines Schleifenstroms innerhalb der Leitung 102. Im Schritt 712 wird der Prozessor wieder in einen Energiesparmodus überführt, und das Verfahren setzt sich fort mit dem Schritt des Energiesammelns 702.

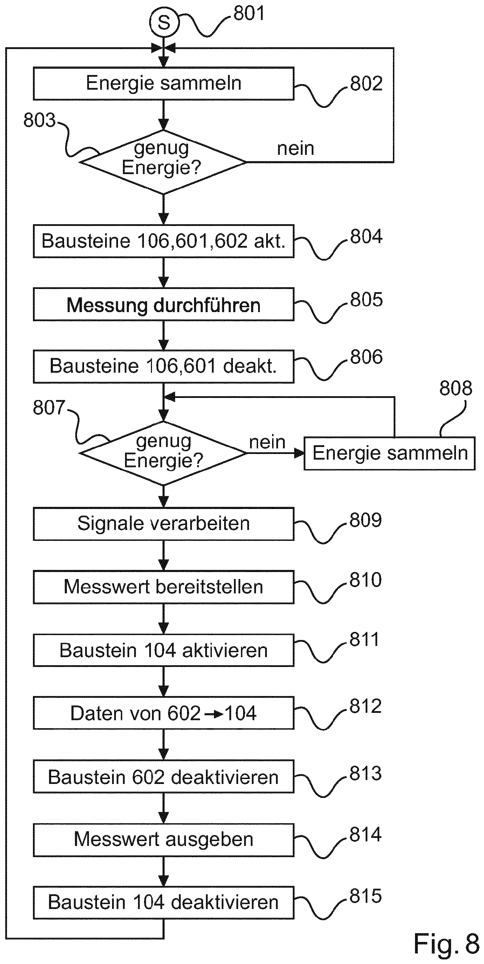

In einer weiteren Ausführungsform kann auch vorgesehen sein, dass die programmierbare Logikeinheit zumindest einen oder auch mehrere Teile der Verarbeitung der digitalisierten Echosignale übernimmt. Figur 8 verdeutlicht ein Verfahren gemäß einer weiteren Ausführungsform der Erfindung. Das Verfahren beginnt im Ausgangszustand 801, in welchem die Bausteine 104, 601, 602, 106 deaktiviert, d.h. in einem energiesparenden Zustand sind. Im Schritt 802 sammelt die Netzteileinheit 103 zunächst Energie, beispielsweise in einem Kondensator innerhalb der Einheit 103. Sobald im Schritt 803 detektiert wird, dass genügend Energie vorhanden ist, werden im Schritt 804 der programmierbare Logikbaustein 602, die Analog-Digital-Wandlereinheit 601 sowie die Hochfrequenzeinheit 106 aktiviert. Im Schritt 805 werden durch das Aussenden einer oder mehrerer Senderampen 301, 504 eine oder auch mehrere Echokurven nach bekanntem Verfahren erfasst und von der Analog-Digital-Wandlereinheit 601 in digitale Abtastwerte überführt. Die digitalen Abtastwerte werden im Wesentlichen zeitsynchron über eine symmetrische Signalübertragungsleitung 603 an den programmierbaren Logikbaustein 602 übermittelt und dort abgespeichert. Im Schritt 806 wird sowohl die Hochfrequenzeinheit 106 als auch die Analog-Digital-Wandlereinheit 601 deaktiviert, um Energie zu sparen. Im Schritt 807 wird überprüft, ob genügend Energie zum Starten der Signalverarbeitung innerhalb des programmierbaren Logikbausteins 602 vorhanden ist. Falls dies nicht zutrifft, wird zunächst im Schritt 808 Energie gesammelt. Es kann vorgesehen sein, den programmierbaren Logikbaustein hierbei in einen energiesparenden Zustand zu überführen, in welchem die Speicherinhalte mit den Messwerten erhalten bleiben. Sobald genügend Energie vorhanden ist, wird im Schritt 809 die eigentliche Verarbeitung der Signale im programmierbaren Logikbaustein 602 begonnen. Da hierzu üblicherweise stark parallelisierte Algorithmen, beispielsweise Filterungen oder schnelle Fouriertransformationen zum Einsatz kommen, kann durch eine Abbildung dieser Verfahrensschritte in spezialisierte Hardwareblöcke innerhalb der Einheit 602 ein wesentliches Maß an Berechnungszeit eingespart werden, was den Energieverbrauch des Sensor reduzieren kann. Es kann hierbei auch vorgesehen sein, einen Teil der Signalverarbeitung durch prozedurale Softwarelogik innerhalb eines Soft-Core-Prozessors im Baustein 602 zu realisieren. Im Schritt 810 wird zumindest ein oder auch mehrere Messwerte innerhalb des Bausteins 602 bereitgestellt. Anschließend wird im Schritt 811 die Prozessoreinheit 104, die im Kontext der Erfindung auch als Prozessor bezeichnet wird, aktiviert, und im Schritt 812 der zumindest eine Messwert über zumindest eine asymmetrische Signalverbindung 604 übertragen. Es sein hier darauf hingewiesen, dass die Menge zu übertragender Daten hier sehr klein ist, weshalb hier sehr langsame Übertragungsstandards verwendet werden können. Im Schritt 813 wird der programmierbare Logikbaustein wieder deaktiviert, bevor im Schritt 814 der zumindest eine Messwert beispielsweise durch die Energieversorgungseinheit 103 nach außen hin bereitgestellt wird. Abschließend wird im Schritt 815 der Prozessor 104 wieder in einen energiesparenden Zustand überführt.

Es sei an dieser Stelle daraufhingewiesen, dass die Prozessoreinheit 104 auch Teil der Energieversorgungseinheit 103 sein kann. Es mag ferner vorgesehen sein, die Prozessoreinheit 104 und die programmierbare Logikeinheit 602 innerhalb eines Chips zu realisieren. In letzterem Fall wird die asymmetrische Übertragung von Daten durch einen direkten Zugriff auf Speicherstellen unter Verwendung eines internen Bussystems innerhalb eines entsprechend programmierten Logikbausteins 602 ermöglicht. Es sei ferner darauf verwiesen, dass auch die Analog-Digital-Wandlereinheit 601 und die Hochfrequenzeinheit 106 in einem gemeinsamen Chip und/oder Chipgehäuse untergebracht sein können.

Die vorliegende Erfindung kann im Zusammenhang mit energiesparenden Zweileitersensoren zur Füllstandmessung vorteilhaft verwendet werden. Es sei aber insbesondere auch darauf hingewiesen, dass er Umfang der vorliegenden Erfindung auch bei sogenannten Vierleitersensoren verwendet werden kann. Die Erfindung kann in besonderem Maße auch für sogenannte Mehrkanalradarsysteme verwendet werden, beispielsweise zur Ermittlung der Topologie einer Schüttgutoberfläche. Abschließend sei darauf hingewiesen, dass die programmierbare Logikeinheit 602 in einer weiteren Ausgestaltung durch eine funktional identische, anwendungsspezifische Schaltung (ASIC) realisiert werden kann.

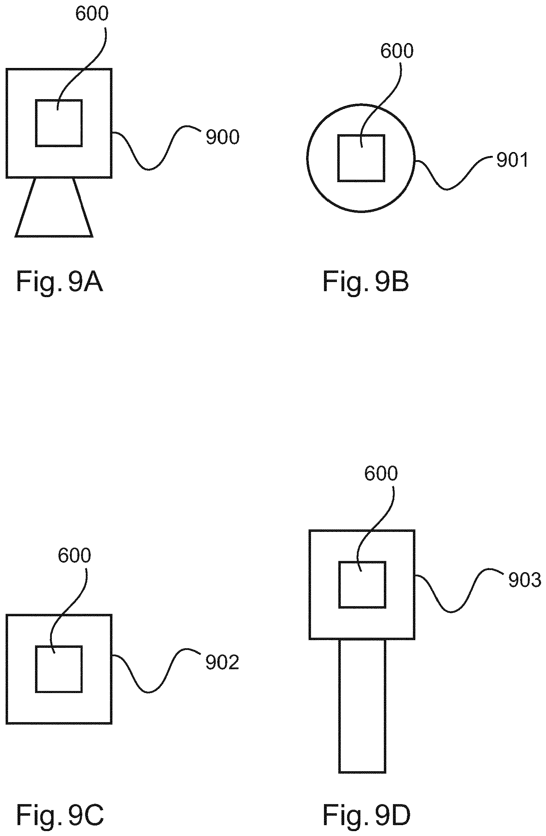

Fig. 9A zeigt ein Füllstandradar 900 mit einer Messgeräteschaltung 600 gemäß einer Ausführungsform der Erfindung. Das Messgerät kann für die dreidimensionale Füllstandmessung ausgeführt sein, in welcher die Topologie der Füllgutoberfläche durch Abscannen der Oberfläche bestimmt werden kann. Das Messgerät kann alternativ zur Anwendung in einem Fahrzeug eingerichtet sein, um Umfelddaten des Fahrzeugs zu erfassen. Fig. 9B zeigt ein Druckmessgerät 901 mit einer Messgerätschaltung 600. Fig. 9C zeigt ein Durchflussmessgerät 902 mit einer Messgeräteschaltung 600 und Fig. 9D zeigt einen Grenzstandsensor 903 mit einer Messgeräteschaltung 600.

Ergänzend sei daraufhingewiesen, dass "umfassend" und "aufweisend" keine anderen Elemente oder Schritte ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

**1.** Verfahren zur Füllstandmessung, Grenzstandmessung, Druckmessung oder Durchflussmessung und zum Erfassen und Verarbeiten von Messdaten, aufweisend die Schritte:

    Aktivieren eines Prozessors;
    Aktivieren eines Zwischenspeicherbausteins (602);
    Empfangen von digitalen Signalen, die mit erfassten Messdaten korrespondieren, von einer Analog-Digital-Wandlerschaltung (601) mit einer ersten Datenrate in dem Zwischenspeicherbaustein;
    Auslesen des Zwischenspeicherbausteins mit einer zweiten Datenrate, welche niedriger als die erste Datenrate ist, durch den Prozessor (104);
    Deaktivieren des Zwischenspeicherbausteins;
    Ausgeben eines Messwerts, der von dem Prozessor und/oder dem Zwischenspeicherbaustein aus den digitalen Signalen berechnet wurde, durch den Prozessor;
    Versetzen des Prozessors in einem Schlafmodus.

2. Füllstandradar, eingerichtet zur Durchführung eines Verfahrens nach Anspruch 1, aufweisend:

    zumindest den Prozessor (104);
    zumindest die Analog-Digital-Wandlerschaltung (601);
    zumindest den Zwischenspeicherbaustein (602), der zwischen dem Prozessor und der Analog-Digital-Wandlerschaltung angeordnet ist;
    wobei der Zwischenspeicherbaustein zum Empfang von digitalen Signalen von der Analog-Digital-Wandlerschaltung mit der ersten Datenrate ausgeführt ist;
    wobei der Prozessor zum Auslesen des Zwischenspeicherbausteins mit der zweiten Datenrate ausgeführt ist, welche niedriger als die erste Datenrate ist.

3. Füllstandradar nach Anspruch 2,
wobei die Analog-Digital-Wandlerschaltung (601) eine differentielle Schnittstelle aufweist und zum Erzeugen der digitalen Signale in Form eines differentiellen Ausgangssignals ausgeführt ist.

4. Füllstandradar nach einem der vorhergehenden Ansprüche 2 bis 3,
wobei der Zwischenspeicherbaustein (602) einen programmierbaren Logikbaustein aufweist.

5. Füllstandradar nach einem der vorhergehenden Ansprüche 2 bis 4,
wobei es sich bei den digitalen Signalen um digitale Abtastwerte eines Empfangssignals des Füllstandradars handelt.

6. Füllstandradar nach einem der vorhergehenden Ansprüche 2 bis 5,
wobei der Zwischenspeicherbaustein (602) zum Verarbeiten der empfangenen digitalen Signale ausgeführt ist.

7. Füllstandradar nach einem der Ansprüche 2 bis 6,
wobei der Zwischenspeicherbaustein (602) einen First In - First Out Speicher und/oder einen Ringspeicher aufweist.

8. Füllstandradar nach einem der vorhergehenden Ansprüche 2 bis 7,
ausgeführt zum Anschluss an eine 4-20 mA Zweileiterschnittstelle zur Energieversorgung und zur Ausgabe der Messwerte.

9. Programmelement, das, wenn es auf einer Messgeräteschaltung ausgeführt wird, die Messgeräteschaltung anleitet, die Schritte nach Anspruch 1 auszuführen.

10. Computerlesbares Medium, auf dem ein Programmelement nach Anspruch 9 gespeichert ist.

11. Verwendung einer Messgeräteschaltung (600), eingerichtet zur Durchführung eines Verfahrens nach Anspruch 1, für die Grenzstandmessung, die Messgeräteschaltung aufweisend:

    zumindest den Prozessor (104);
    zumindest die Analog-Digital-Wandlerschaltung (601);
    zumindest den Zwischenspeicherbaustein (602), der zwischen dem Prozessor und der Analog-Digital-Wandlerschaltung angeordnet ist;
    wobei der Zwischenspeicherbaustein zum Empfang von digitalen Signalen von der Analog-Digital-Wandlerschaltung mit der ersten Datenrate ausgeführt ist;
    wobei der Prozessor zum Auslesen des Zwischenspeicherbausteins mit der zweiten Datenrate ausgeführt ist, welche niedriger als die erste Datenrate ist.

12. Verwendung einer Messgeräteschaltung (600), eingerichtet zur Durchführung eines Verfahrens nach Anspruch 1, für die Druckmessung, die Messgeräteschaltung aufweisend:

    zumindest den Prozessor (104);
    zumindest die Analog-Digital-Wandlerschaltung (601);
    zumindest den Zwischenspeicherbaustein (602), der zwischen dem Prozessor und der Analog-Digital-Wandlerschaltung angeordnet ist;

wobei der Zwischenspeicherbaustein zum Empfang von digitalen Signalen von der Analog-Digital-Wandlerschaltung mit der ersten Datenrate ausgeführt ist;

wobei der Prozessor zum Auslesen des Zwischenspeicherbausteins mit der zweiten Datenrate ausgeführt ist, welche niedriger als die erste Datenrate ist.

13. Verwendung einer Messgeräteschaltung (600), eingerichtet zur Durchführung eines Verfahrens nach Anspruch 1, für die Durchflussmessung, die Messgeräteschaltung aufweisend:

zumindest den Prozessor (104);
zumindest die Analog-Digital-Wandlerschaltung (601);
zumindest den Zwischenspeicherbaustein (602), der zwischen dem Prozessor und der Analog-Digital-Wandlerschaltung angeordnet ist;
wobei der Zwischenspeicherbaustein zum Empfang von digitalen Signalen von der Analog-Digital-Wandlerschaltung mit der ersten Datenrate ausgeführt ist;
wobei der Prozessor zum Auslesen des Zwischenspeicherbausteins mit der zweiten Datenrate ausgeführt ist, welche niedriger als die erste Datenrate ist.

**Claims**

1. A method for level measurement, point level measurement, pressure measurement or flow measurement and for acquiring and processing measurement data, comprising the steps of:

Activating a processor (104);
Activating a buffer module (602);
receiving digital signals corresponding to sensed measurement data from an analog-to-digital converter circuit (601) at a first data rate in the buffer module;
reading the buffer memory device at a second data rate, which is lower than the first data rate, by the processor (104);
deactivating the buffer memory device;
outputting, by the processor, a measurement value calculated from the digital signals by the processor and/or the buffer memory device;
putting the processor (104) in a sleep mode.

2. A level radar adapted to perform a method according to claim 1, comprising:

at least the processor (104);
at least the analog-to-digital converter circuit (601);
at least the buffer circuit (602) disposed between the processor and the analog-to-digital converter circuit;
wherein the buffer circuit is adapted to receive digital signals from the analog-to-digital converter circuit at the first data rate;
wherein the processor is adapted to read the buffer device at the second data rate that is lower than the first data rate.

3. Level radar according to claim 2, wherein the analog-to-digital converter circuit (601) has a differential interface and is configured to generate the digital signals in the form of a differential output signal.

4. Level radar according to any one of the preceding claims 2 to 3, wherein the buffer module (602) comprises a programmable logic module.

5. Level radar according to any one of the preceding claims 2 to 4, wherein the digital signals are digital samples of a received signal of the level radar.

6. Level radar according to any one of the preceding claims 2 to 5, wherein the buffer module (602) is adapted to process the received digital signals.

7. Level radar according to any one of claims 2 to 6, wherein the buffer module (602) comprises a first in - first out memory and/or a ring buffer.

8. Level radar according to any of the preceding claims 2 to 7, adapted to be connected to a 4-20 mA two-wire interface for power supply and output of the measured values.

9. A program element which, when executed on a meter circuit, instructs the meter circuit to perform the steps of claim 1.

10. A computer-readable medium on which is stored a program element according to claim 9.

11. Use of a meter circuit (600) adapted to perform a method according to claim 1 for point level measurement, the meter circuit comprising:

at least the processor (104);
at least the analog-to-digital converter circuit (601);

at least the buffer circuit (602) disposed between the processor and the analog-to-digital converter circuit;

wherein the buffer circuit is adapted to receive digital signals from the analog-to-digital converter circuit at the first data rate;

wherein the processor is adapted to read the buffer device at the second data rate that is lower than the first data rate.

12. Use of a meter circuit (600) adapted to perform a method according to claim 1 for measuring pressure, the meter circuit comprising:

at least the processor (104);
at least the analog-to-digital converter circuit (601);
at least the buffer circuit (602) disposed between the processor and the analog-to-digital converter circuit;
wherein the buffer circuit is adapted to receive digital signals from the analog-to-digital converter circuit at the first data rate;
wherein the processor is adapted to read the buffer device at the second data rate that is lower than the first data rate.

13. Use of a meter circuit (600) adapted to perform a method according to claim 1 for flow measurement, the meter circuit comprising:

at least the processor (104);
at least the analog-to-digital converter circuit (601);
at least the buffer circuit (602) disposed between the processor and the analog-to-digital converter circuit;
wherein the buffer circuit is adapted to receive digital signals from the analog-to-digital converter circuit at the first data rate;
wherein the processor is adapted to read the buffer device at the second data rate that is lower than the first data rate.

**Revendications**

1. Procédé de mesure de niveau de remplissage, de mesure de niveau limite, de mesure de pression ou de mesure de débit et d'acquisition et de traitement de données de mesure, comprenant les étapes consistant à :

activer un processeur (104);
activer un module de mémoire tampon (602) ;
recevoir des signaux numériques correspondant à des données de mesure acquises, provenant d'un circuit de conversion analogique-numérique (601), à un premier débit de données dans le module de mémoire tampon ;
lire le module de mémoire tampon à un deuxième débit de données, qui est inférieur au premier débit de données, par le processeur (104) ;
désactiver le module de mémoire tampon ;
délivrer, par le processeur, une valeur de mesure qui a été calculée par le processeur et/ou le module de mémoire tampon à partir des signaux numériques;
mettre le processeur (104) en veille.

2. Radar de niveau de remplissage, configuré pour mettre en œuvre un procédé selon la revendication 1, présentant :

au moins le processeur (104) ;
au moins le circuit de conversion analogique-numérique (601) ;
au moins le module de mémoire tampon (602) disposé entre le processeur et le circuit de conversion analogique-numérique ;
dans lequel le module de mémoire tampon est conçu pour recevoir des signaux numériques du circuit de conversion analogique-numérique au premier débit de données ;
dans lequel le processeur est conçu pour lire le module de mémoire tampon au deuxième débit de données qui est inférieur au premier débit de données.

3. Radar de niveau de remplissage selon la revendication 2,
dans lequel le circuit de conversion analogique-numérique (601) présente une interface différentielle et est conçu pour générer les signaux numériques sous la forme d'un signal de sortie différentiel.

4. Radar de niveau de remplissage selon l'une des revendications 2 à 3 précédentes,
dans lequel le module de mémoire tampon (602) présente un module logique programmable.

5. Radar de niveau de remplissage selon l'une des revendications 2 à 4 précédentes,
dans lequel les signaux numériques sont des valeurs d'échantillonnage numériques d'un signal de réception du radar de niveau de remplissage.

6. Radar de niveau de remplissage selon l'une des revendications 2 à 5 précédentes,
dans lequel le module de mémoire tampon (602) est conçu pour traiter les signaux numériques reçus.

7. Radar de niveau de remplissage selon l'une des revendications 2 à 6,
dans lequel le module de mémoire tampon (602) présente une mémoire premier entré, premier sorti et/ou une mémoire circulaire.

**8.** Radar de niveau de remplissage selon l'une des revendications 2 à 7 précédentes, conçu pour être connecté à une interface bifilaire 4-20 mA pour l'alimentation en énergie et la sortie des valeurs de mesure.

**9.** Élément de programme qui, lorsqu'il est exécuté sur un circuit d'appareil de mesure, amène le circuit d'appareil de mesure à exécuter les étapes selon la revendication 1.

**10.** Support lisible par ordinateur sur lequel est stocké un élément de programme selon la revendication 9.

**11.** Utilisation d'un circuit d'appareil de mesure (600), configuré pour mettre en œuvre un procédé selon la revendication 1, pour la mesure de niveau limite, le circuit d'appareil de mesure présentant :

au moins le processeur (104) ;
au moins le circuit de conversion analogique-numérique (601) ;
au moins le module de mémoire tampon (602) disposé entre le processeur et le circuit de conversion analogique-numérique ;
dans lequel le module de mémoire tampon est conçu pour recevoir des signaux numériques du circuit de conversion analogique-numérique au premier débit de données ;
dans lequel le processeur est conçu pour lire le module de mémoire tampon au deuxième débit de données qui est inférieur au premier débit de données.

**12.** Utilisation d'un circuit d'appareil de mesure (600), configuré pour mettre en œuvre un procédé selon la revendication 1, pour la mesure de pression, le circuit d'appareil de mesure présentant :

au moins le processeur (104) ;
au moins le circuit de conversion analogique-numérique (601) ;
au moins le module de mémoire tampon (602) disposé entre le processeur et le circuit de conversion analogique-numérique ;
dans lequel le module de mémoire tampon est conçu pour recevoir des signaux numériques du circuit de conversion analogique-numérique au premier débit de données ;
dans lequel le processeur est conçu pour lire le module de mémoire tampon audeuxième débit de données qui est inférieur au premier débit de données.

**13.** Utilisation d'un circuit d'appareil de mesure (600), configuré pour mettre en œuvre un procédé selon la revendication 1, pour la mesure de débit, le circuit d'appareil de mesure présentant :

au moins le processeur (104) ;
au moins le circuit de conversion analogique-numérique (601) ;
au moins le module de mémoire tampon (602) disposé entre le processeur et le circuit de conversion analogique-numérique ;
dans lequel le module de mémoire tampon est conçu pour recevoir des signaux numériques du circuit de conversion analogique-numérique au premier débit de données ;
dans lequel le processeur est conçu pour lire le module de mémoire tampon au deuxième débit de données qui est inférieur au premier débit de données.

Fig. 1

Fig. 2

Fig. 3

Fig. 4

Fig. 5

Fig. 6

Fig. 7

Fig. 8

600

900

Fig. 9A

600

901

Fig. 9B

600

902

Fig. 9C

600

903

Fig. 9D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7334470 B1
- US 5245347 A
- WO 03019120 A1